(19) Europäisches Patentamt
European Patent Office
Office européen des brevets

(11) Publication number : **0 390 539 B1**

(12) # EUROPEAN PATENT SPECIFICATION

(45) Date of publication of patent specification : **15.06.94 Bulletin 94/24**

(51) Int. Cl.$^5$ : **A01N 43/78,** A01N 37/02, A01N 25/04, A01N 25/30, A01N 37/18

(21) Application number : **90303319.9**

(22) Date of filing : **28.03.90**

(54) **Compositions containing 2-thiocyanomethyl-thiobenzothiazole.**

(30) Priority : **30.03.89 US 330499**

(43) Date of publication of application : **03.10.90 Bulletin 90/40**

(45) Publication of the grant of the patent : **15.06.94 Bulletin 94/24**

(84) Designated Contracting States : **AT BE CH DE DK ES FR GB GR IT LI LU NL SE**

(56) References cited :
**EP-A- 0 293 246**
**EP-A- 0 327 206**
**DE-A- 3 024 496**
**DE-A- 3 208 333**
**DE-A- 3 628 575**
**US-A- 3 463 785**
**US-A- 3 520 976**
**US-A- 4 255 450**

(73) Proprietor : **BUCKMAN LABORATORIES INTERNATIONAL, INC.**
**1256 North McLean Boulevard**
**P.O. Box 8305**
**Memphis Tennessee 38108-0305 (US)**

(72) Inventor : **Miller, Robert H., Jr.**
**215 Walnut Bend Drive**
**Arlington, TN 38002 (US)**
Inventor : **Nagel, Marc F.**
**696 N. Belvedere**
**Memphis, TN 38107 (US)**
Inventor : **Conaway, Lawrence S.**
**Rt. 1, Box 138A**
**Dundee, MI 38626 (US)**

(74) Representative : **Matthews, Derek Peter et al**
**Frank B. Dehn & Co.**
**Imperial House**
**15-19 Kingsway**
**London WC2B 6UZ (GB)**

**EP 0 390 539 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to compositions of 2-thiocyanomethylthiobenzothiazole which have improved handling characteristics in various industrial processes for the purpose of controlling the growth and reproduction of microorganisms.

More particularly, the invention relates to compositions containing 2-thiocyanomethylthiobenzothiazole to inhibit growth of fungi and bacteria in industrial processes and products.

Many industrial products, both during the process of manufacture and as the finished product, are susceptible to fungal and bacterial degradation if means are not taken to inhibit these microorganisms. Wood pulp, lumber, starch and proteinaceous substances, animal hides, tanning liquors, leather, metal cutting fluids and many agricultural products are damaged and/or rendered aesthetically unappealing by the growth of bacteria, fungi and other microorganisms or by enzymes produced by such growth.

For example, wood pulp containing more than approximately 30 percent moisture is subject to attack by stain, mold and decay fungi and is a fertile substrate for bacterial growth. Loss of useful fiber, darkening of color, difficulties in dispersion of the fiber and undesirable odors are all consequences of uncontrolled growth of microorganisms.

Similarly, if the moisture content is between approximately 19 and 67 percent of the total weight, lumber may be attacked with resultant staining and surface mold. Also, the presence of these microorganisms contributes to a greater tendency of the dry finished lumber to absorb moisture which increases susceptibility to warpage and further microbial attack.

The growth of bacteria and fungi is always encountered in the manufacture of leather. Mold growth in tanning liquors and upon the animal hides themselves may result in spotted and discolored leather.

Aqueous metal cutting fluids under attack by bacteria and fungi will develop highly noxious odors and may constitute health hazards to workers who frequently are in dermal contact with the infected fluid. Metabolic products of microbial degradation often are corrosive to the materials being machined and also inhibit lubricity and heat-transfer of the fluid.

In the agricultural industry, seed in storage will be attacked by various microorganisms given moisture conditions favorable for their growth. Fungal attack of seed used for planting purposes results in lower crop yields due to partial loss of viability of the seed.

An organic thiocyanate described in U.S. Patent Nos. 3,463,785 and 3,520,976, 2-thiocyanomethylthiobenzothiazole (to be designated hereinafter as TCMTB), has been used successfully for many years for the purpose of control of microbial growth in all the above-stated applications. Generally, this microbicide has been formulated as an emulsifiable concentrate or a pre-emulsified water-based concentrate which may be diluted with water to yield a fine dispersion of TCMTB to give a final TCMTB concentration of about 0.001 to 3% by weight. Typical formulations contain significant amounts, often 30-40% by weight, of aromatic hydrocarbon solvents, which are an aid in providing both a stable concentrate and a stable ready-to-use dilution in water. Typical aromatic hydrocarbon solvents are volatile, air-borne solvents and include, for example, alkyl benzene compounds, such as xylene and cumene, and alkyl naphthalene compounds.

According to EP-A 293 246, dimethyl formamide can also be used as solvent.

In recent years, however, a growing awareness of the need for increased industrial hygiene and environmental acceptability, in part manifested as increasing governmental regulation, has brought about the search for a TCMTB formulation of lower skin and eye irritation and also of lower odor.

Furthermore, current compositions of TCMTB are limited in the stability of their work dilutions at low temperatures. Specifically, at low temperatures, crystals of TCMTB may precipitate from the working dilution in water.

It is, therefore, a principal object of the present invention to provide a stable composition which has less objectionable odor and provides for reduced skin, eye and respiratory irritation over present TCMTB compositions.

It is another object of the present invention to provide a composition which contains substantially reduced amounts of volatile aromatic hydrocarbon solvents.

It is yet another object of the present invention to provide a composition, which compared to prior art TCMTB compositions, yields working dilutions of improved low temperature stability.

The invention provides a composition comprising TCMTB, at least one suitable dispersant and at least one branched or straight chain alkyl ester-alcohol. Preferably, the at least one branched or straight chain alkyl-ester alcohol is mixed with at least one alkyl N,N-dialkyl amide.

The invention also provides a method of inhibiting the growth of a microorganism on a substrate susceptible to such growth which comprises the steps of:

adding a composition according to the invention to water; and

applying the resulting aqueous composition to said substrate, the amount of TCMTB in said aqueous composition being effective to inhibit the growth of said microorganism.

The invention further provides a method of inhibiting the growth of a microorganism in an aqueous fluid in contact with a substance susceptible to microbiological deterioration which comprises the step of:

adding a composition according to the invention to said aqueous fluid, the amount of TCMTB in said composition being effective to inhibit the growth of said microorganism.

In the abovementioned methods an effective concentration of TCMTB is conveniently 0.001% to 3% by weight.

TCMTB is commercially available from numerous sources. For example, technical grade TCTMB is commercially available as Busan 80 product from Buckman Laboratories International, Inc. It is preferred that Busan 80 product or other basically equivalent commercial form of TCMTB be used. Alternatively, one skilled in the art can produce TCMTB by methods such as those disclosed in U.S. Patent Nos. 3,463,785 and 3,520,976.

Many years of formulation research with TCMTB have borne out the inherent difficulty in producing compositions which yield stable working dilutions in water. Several highly successful commercial products, such as the Busan 1030 product, the Busan 30A product, and the Busan 30L product are emulsifiable concentrates containing 30 percent TCMTB and containing significant quantitites of the volatile aromatic hydrocarbon solvents described above.

To date, very few classes of compounds have been discovered which are suitable for use as dispersants and/or solvents (diluents) in these TCMTB compositions. A pre-emulsified water-based product, Busan 30WB, contains reduced quantities of aromatic hydrocarbon solvents, but is susceptible to loss of low temperature stability in both the concentrate and the working dilutions in water.

When taking into consideration the characteristics of TCMTB solubility, subsequent stability of working dilutions, ease of dispersion of the concentrate, flammability and toxicological constraints, it has been found that nearly all currently commercially available materials which could be used as solvents and/or dispersants are less than perfect in one respect or another for use in making a saleable product. Presently, compositions of TCMTB with (1) heavy aromatic hydrocarbons, for example alkyl benzenes such as xylene and cumene, and alkyl naphthalenes, (2) glycol ethers, and, (3) blends of polyoxyethylene alkyl aryl ethers, polyoxyethylene glycerides and alkyl aryl sulfonates are in common usage.

The present invention provides the aforementioned advantages over the prior state of the art by virtue of a composition containing as the solvent at least one branched or straight chain alkyl ester-alcohol. The solvent is combined with TCMTB and at least one dispersant to yield a composition which, when diluted with water, provides a stable microbiocidal dilution.

The at least one alkyl ester-alcohol can be combined with at least one glycol ether. The at least one alkyl ester-alcohol is preferably combined with at least one alkyl N,N-dialkylamide. Further, the alkyl ester-alcohol can be combined with at least one glycol ether <u>and</u> at least one alkyl N,N-dialkylamide.

It is preferred to use a branched or straight chain alkyl ester-alcohol with a molecular weight ranging from 130-300. Such ester-alcohols are commercially available or can be routinely produced by one skilled in the art.

More specifically, it is preferred to use at least one branched alkyl ester-alcohol selected from 2,2,4-trimethylpentane-1,3-diol-1-isobutyrate and 2,2,4-trimethylpentane-1,3-diol-3-isobutyrate. These 1-isobutyrate and 3-isobutyrate compounds can be combined together in any and all proportions and used as the solvent.

It is most preferable to use a mixture of 2,2,4-trimethylpentane-1,3-diol-1-isobutyrate and 2,2,4-trimethylpentane-1,3-diol-3-isobutyrate, wherein each of the isobutyrates has a molecular weight of 216, and wherein the 1-isobutyrate compound constitutes at least 95% by weight of the mixture of 1-isobutyrate and 3-isobutyrate compounds. This mixture is sold under the trademark of Texanol by Eastman Chemical Products, Inc.

The alkyl N,N-dialkylamide, which may be preferably used in combination with the ester-alcohol, has the formula (I):

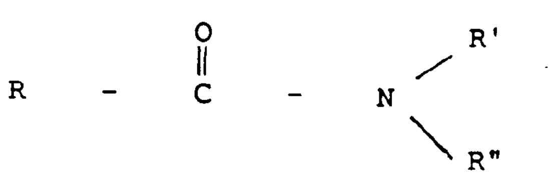

(I)

wherein R is a saturated or unsaturated alkyl radical which may be hydroxy substituted and contains from 1 to 22 carbon atoms, and R′ and R″ are saturated or unsaturated alkyl radicals containing from 1 to 4 carbon atoms. Such dialkyl amides are commercially available, such as from C.P. Hall Co. and Arizona Chemical Co.,

or can be routinely produced by one skilled in the art.

Preferably, an alkyl N,N-dialkylamide of a fatty acid is used. Representative alkyl N,N-dialkylamides are those of soybean oil fatty acids, safflower oil fatty acids, cottonseed oil fatty acids, palm oil fatty acids, coconut oil fatty acids and corn oil fatty acids. More preferably, an alkyl N,N-dialkylamide of tall oil fatty acids or soybean oil fatty acids is selected. The alkyl N,N-dialkylamide of choice is the N,N-dimethylamide of tall oil fatty acids.

Preferably, the mixture of 2,2,4-trimethylpentane-1,3-diol-1-isobutyrate and 2,2,4-trimethylpentane-1,3-diol-3-isobutyrate alone, the mixture of isobutyrates combined with a glycol ether, such as diethylene glycol monomethylether or diethylene glycol monoethyl ether, or the mixture of isobutyrates in combination with the alkyl N,N-dialkylamide of formula (I) is combined with TCMTB and at least one suitable dispersant, such as one of the following types of suitable dispersants, to produce a microbiocidal concentrate: polyoxyethylene alkylaryl ethers, polyoxyethylene alkyl ethers, polyoxyethylene glycerides, alkylaryl sulfonates, polyalkylene glycol ethers and propylene oxide/ethylene oxide block polymers.

The aforementioned glycol ethers and dispersants are commercially available or can be routinely produced by one skilled in the art. Exemplary dispersants are sold under the trade names Atlox 3403 F, Atlox 3404 F, Atlox 3409 F, Casul 70 HF, Tergitol XD and Pluronic L64.

In the composition of the invention containing 2-thiocyanomethylthiobenzothiazole, at least one branched or straight chain alkyl ester-alcohol and at least one suitable dispersant, it is preferred that the amount of 2-thiocyanomethythiobenzothiazole varies from 10 to 50, more preferably from 20 to 50, the amount of branched or straight chain alkyl ester-alcohol varies from 20 to 80, more preferably from 20 to 70, and the amount of dispersant varies from 5 to 30, more preferably from 5 to 25, all numbers being expressed in percent by weight.

In the composition containing 2-thiocyanomethylthiobenzothiazole, a branched or straight chain alkyl ester-alcohol, an alkyl N,N-dialkyl amide and a dispersant, it is preferred that the amount of 2-thiocyanomethylthiobenzothiazole varies from 20 to 50, the amount of alkyl ester-alcohol varies from 10 to 50, the amount of alkyl N,N-dialkyl amide varies from 10 to 35 and the amount of dispersant varies from 5 to 25, all numbers being expressed in percent by weight.

The present invention can thus replace the currently-used volatile aromatic hydrocarbon TCMTB systems and attain the full benefits and advantages heretofore described. It is not, however, necessary that the composition of the present invention be totally free of volatile aromatic hydrocarbon solvents.

Not uncommonly, the composition of the present invention will possess a small amount, such as 1% by weight, of volatile aromatic solvents. Compositions of the invention containing such small amounts of volatile aromatic hydrocarbon solvents are considered to be essentially free of volatile aromatic hydrocarbon solvents.

Further, it is considered that the presence of even larger amounts of volatile aromatic hydrocarbon solvents, such as about 10-19% by weight, fall within the scope of the invention. Such compositions are not preferred because, as the amount of volatile aromatic hydrocarbon solvents increases, so also do toxicity and environmental risks.

Stated broadly, the composition of the present invention is useful for all applications for which TCMTB dispersions in water are currently used. The overall utility of the composition of the present invention is greater, however, than that of the prior art.

For instance, the increased low-temperature stability of dilutions in water of the composition of the present invention may allow its use under cold-weather conditions unsuitable for prior art TCMTB compositions. As another instance, work-place ventilation restraints may limit the use of conventional TCMTB formulations for microbiocidal use because of physical irritation to those handling the product and its dilutions. As still another instance, a great reduction in the amount of volatile aromatic hydrocarbon solvent present offers the possibility of the use of TCMTB in geopolitical areas with strict legal environmental emissions restraints.

In order to disclose the nature of the invention still more clearly, the following illustrative examples will be given. It is understood, however, that the invention is not to be limited to the specific conditions or details set forth in these examples, except insofar as such limitations are specified in the appended claims. In the examples, all components of the invention are expressed as percent by weight of the total composition.

## Example 1

A composition containing 38% technical-grade TCMTB (so as to yield 30% active TCMTB) also known and sold as Busan 80 by Buckman Laboratories International, Inc., 30% Texanol ester-alcohol, 16% of the dimethylamide of tall oil fatty acids, 4% Atlox 3403F dispersant (a blend of an alkylaryl sulfonate, polyoxyethylene alkyl ethers and polyoxyethylene glycerides sold by ICI Americas, Inc.), 3% Atlox 3404F dispersant (a blend of an alkylaryl sulfonate and polyoxyethylene alkylaryl ethers sold by ICI Americas, Inc.) and 9% Atlox 3409F dispersant (a blend of an alkylaryl sulfonate and polyoxyethylene alkylaryl ethers, sold by ICI Americas, Inc.)

was made by stirring all ingredients together in a beaker.

This composition suffered no crystallization of active ingredient or other degradation after six months of storage at -15°C.

Dilutions of this composition of 1 percent and 2 percent by weight in water were evaluated for their initial dispersibility. This was accomplished by adding the appropriate amount of the composition to a stopper-equipped 250 mL graduated cylinder containing 200 mL of cold water. The initial "bloom" was noted as was any subsequent phase separation. The dispersibility of this composition was found to be superior to both the Susan 30WB and Busan 1030 products, which are examples of the prior art. The results are presented in the following Table 1.

**TABLE 1**

DISPERSIBILITY IN WATER

| | ONE PERCENT | | | | TWO PERCENT | | | |
|---|---|---|---|---|---|---|---|---|
| | INITIAL BLOOM | 1 HOUR | 2 HOURS | 24 HOURS | INITIAL BLOOM | 1 HOUR | 2 HOURS | 24 HOURS |
| Example 1 | Excellent | 1 | 1 | 2 | Excellent | 1 | 2 | 3 |
| Example 2 | Excellent | 2 | 2 | 2 | Excellent | 2 | 2 | 2 |
| Example 3 | Good | 2 | 2 | 2 | Good | 1 | 2 | 3 |
| Example 4 | Excellent | 1 | 1 | 2 | Excellent | 1 | 1 | 2 |
| Busan® 30WB product | Needs Shaking | 1 | 1 | 4 | Needs Shaking | 1 | 1 | 4 |
| Busan® 1030 product | Excellent | 1 | 2 | 4 | Excellent | 1 | 2 | 5 |

Ranking:
1 Perfect - no separation
2 Trace separation or creaming
3 1% or less separation top or bottom
4 1 to 5% separation top or bottom
5 greater than 5% separation

The long term cold stability of 1 and 2 percent work dilutions in water was evaluated by simple daily observation of samples stored at 0°C. The first appearance of TCMTB crystals was observed after five days storage compared to 4 days for Busan® 1030 product and 12 hours for Busan 30WB product. Continuing observation over 30 days time indicated that dilutions of this composition yielded less crystalline TCMTB precipitate than Busan 1030 product, Busan 30L product, and Busan 30WB product, ranked in order of increasing precipitate.

A comparative odor test was performed in our laboratory among 12 people. All twelve found this composition to be far more acceptable in odor compared to Busan 1030 product.

Five experimental evaluations of this compostion were made at four lumber mills in Canada in order to determine the worker-response to exposure to this composition. These lumber mills spray-applied water dilutions of this composition to green lumber in order to control sapstain and mold growth during the air-drying of the wood.

All five trials resulted in highly favorable responses from those working with dilutions in water of the improved formula. The composition was judged to be much more amenable to irritation-free handling than conventional TCMTB formulations.

A major agricultural chemical formulator compared this composition with Busan 30A product in an odor evaluation during the experimental treatment of seed. Workers reported significantly less odor during seed treatment using this new composition.

Example 2

A composition containing 38% technical-grade TCMTB, 16% Texanol ester-alcohol, 30% of the dimethylamide of tall oil fatty acids, 4% Atlox 3403F dispersant, 3% Atlox 3404F dispersant and 9% Atlox 3409F dispersant was prepared as described in Example 1 and evaluated for odor, cold stability of concentrate, dispersibility in water and cold storage stability of working dilutions in water, also as described in Example 1.

This composition was found to be equivalent to the Busan 1030 product in cold storage stability of dilutions, and concentrate stability. It was superior to both the Busan 1030 and Susan 30 WB products in dispersibility in water (see Table 1 above), and far superior in the odor evaluation.

Example 3

A composition containing 38% technical-grade TCMTB, 46% Texanol ester-alcohol, 4% Atlox 3403F dispersant , 3% Atlox 3404F dispersant and 9% Atlox 3409F dispersant was prepared and evaluated as in Example 2.

This composition was found to be equivalent to the Busan 1030 product in dispersibility (see Table 1 above) cold storage stability of both the concentrate and work dilutions, and far superior in the odor evaluation. Example 3 is superior to the Busan 30WB product in water dispersibility (see Table 1 above).

Example 4

A composition containing 38.75% technical-grade TCMTB, 23.25% Texanol® ester-alcohol, 22.00% diethylene glycol monoethyl ether, 4.80% Casul 70HF dispersant (calcium alkylaryl sulfonate sold by Thompson-Hayward Chemical Co. Calcium alkylaryl sulfonate is also sold as Alkasurf Ag-CAHF dispersant by Alkaril Chemicals, Ltd.), 3.20% Tergitol XD dispersant (polyalkylene glycol ether sold by Union Carbide Corp.) and 8.0% Pluronic L64 dispersant (propylene oxide/ethylene oxide block polymer sold by BASF Corp.) was prepared and evaluated as in Example 2.

This composition was found to be equivalent to the Busan 1030 product in cold storage stability of the concentrate and working dilutions, and clearly superior in the odor evaluation. This composition is superior to both Busan 30 WB and Busan 1030 products in water dispersibility (see Table 1).

**Claims**

**Claims for the following Contracting States : AT, BE, CH, DE, DK, FR, GB, GR, IT, LI, LU, NL, SE**

**1.** A water-dispersible microbicidal composition comprising 2-thiocyanomethylthiobenzothiazole, at least one branched or straight chain alkyl ester-alcohol and at least one dispersant.

2. A composition as claimed in claim 1, wherein said dispersant is a polyoxyethylene alkylaryl ether, polyoxyethylene alkyl ether, polyoxyethylene glyceride, alkylaryl sulfonate, polyalkylene glycol ether or propylene oxide/ethylene oxide block polymer.

3. A composition as claimed in claim 1 or claim 2, wherein said alkyl ester-alcohol is a branched chain alkyl ester-alcohol having a molecular weight of about 130 to 300.

4. A composition as claimed in claim 3, wherein said alkyl ester-alcohol is a mixture of 2,2,4-trimethylpentane-1,3-diol-1-isobutyrate and 2,2,4-trimethylpentane-1,3-diol-3-isobutyrate.

5. A composition as claimed in claim 4, wherein the 1-isobutyrate compound constitutes at least 95% by weight of said mixture.

6. A composition as claimed in any preceding claim, wherein the amount of 2-thiocyanomethylthiobenzothiazole is from 10 to 50%, the amount of branched or straight chain alkyl ester-alcohol is from 20 to 80%, and the amount of dispersant is from 5 to 30%, all in percent by weight.

7. A composition as claimed in any preceding claim, wherein the amount of 2-thiocyanomethylthiobenzothiazole is from 20 to 50%, the amount of branched or straight chain alkyl ester-alcohol is from 20 to 70%, and the amount of dispersant is from 5 to 25%, all in percent by weight.

8. A composition as claimed in any preceding claim further comprising an alkyl N,N-dialkyl amide of the formula

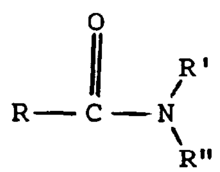

wherein R is a saturated or unsaturated alkyl radical which may be hydroxy substituted and contains from 1 to 22 carbon atoms and R′ and R″ are saturated or unsaturated alkyl radicals containing from 1 to 4 carbon atoms.

9. A composition as claimed in claim 8, wherein the amount of 2-thiocyanomethylthio-benzothiazole is from 20 to 50%, the amount of branched or straight chain alkyl ester-alcohol is from 10 to 50%, the amount of alkyl N,N-dialkyl amide is from 10 to 35% and the amount of dispersant is from 5 to 25%, all in percent by weight.

10. A composition as claimed in claim 8 or claim 9, wherein the alkyl N,N-dialkyl amide is the N,N-dimethyl amide of tall oil fatty acids or soybean oil fatty acids.

11. A method of inhibiting the growth of a microorganism on a substrate susceptible to such growth which comprises the steps of:
adding a composition as defined in any preceding claim to water; and
applying the resulting aqueous composition to said substrate.

12. A method of inhibiting the growth of a microorganism in an aqueous fluid in contact with a substance susceptible to microbiological deterioration which comprises the step of:
adding a composition as defined in any of claims 1 to 10 to said aqueous fluid.

**Claims for the following Contracting State : ES**

1. A process for preparing a water-dispersible microbicidal composition comprising admixing 2-thiocyanomethylthiobenzothiazole, at least one branched or straight chain alkyl ester-alcohol and at least one dispersant.

2. A process as claimed in claim 1, wherein said dispersant is a polyoxyethylene alkylaryl ether, polyoxyethylene alkyl ether, polyoxyethylene glyceride, alkylaryl sulfonate, polyalkylene glycol ether or propylene oxide/ethylene oxide block polymer.

3. A process as claimed in claim 1 or claim 2, wherein said alkyl ester-alcohol is a branched chain alkyl ester-alcohol having a molecular weight of about 130 to 300.

4. A process as claimed in claim 3, wherein said alkyl ester-alcohol is a mixture of 2,2,4-trimethylpentane-1,3-diol-1-isobutyrate and 2,2,4-trimethylpentane-1,3-diol-3-isobutyrate.

5. A process as claimed in claim 4, wherein the 1-isobutyrate compound constitutes at least 95% by weight of said mixture.

6. A process as claimed in any preceding claim, wherein the amount of 2-thiocyanomethylthiobenzothiazole is from 10 to 50%, the amount of branched or straight chain alkyl ester-alcohol is from 20 to 80%, and the amount of dispersant is from 5 to 30%, all in percent by weight.

7. A process as claimed in any preceding claim, wherein the amount of 2-thiocyanomethylthiobenzothiazole is from 20 to 50%, the amount of branched or straight chain alkyl ester-alcohol is from 20 to 70%, and the amount of dispersant is from 5 to 25%, all in percent by weight.

8. A process as claimed in any preceding claim further comprising admixing an alkyl N,N-dialkyl amide of the formula

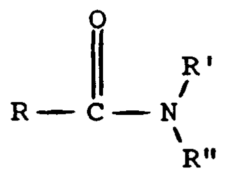

wherein R is a saturated or unsaturated alkyl radical which may be hydroxy substituted and contains from 1 to 22 carbon atoms and R′ and R″ are saturated or unsaturated alkyl radicals containing from 1 to 4 carbon atoms.

9. A process as claimed in claim 8, wherein the amount of 2-thiocyanomethylthio-benzothiazole is from 20 to 50%, the amount of branched or straight chain alkyl ester-alcohol is from 10 to 50%, the amount of alkyl N,N-dialkyl amide is from 10 to 35% and the amount of dispersant is from 5 to 25%, all in percent by weight.

10. A process as claimed in claim 8 or claim 9, wherein the alkyl N,N-dialkyl amide is the N,N-dimethyl amide of tall oil fatty acids or soybean oil fatty acids.

11. A method of inhibiting the growth of a microorganism on a substrate susceptible to such growth which comprises the steps of:
adding a composition as defined in any preceding claim to water; and
applying the resulting aqueous composition to said substrate.

12. A method of inhibiting the growth of a microorganism in an aqueous fluid in contact with a substance susceptible to microbiological deterioration which comprises the step of:
adding a composition as defined in any of claims 1 to 10 to said aqueous fluid.

**Patentansprüche**

**Patentansprüche für folgende Vertragsstaaten : AT, BE, CH, DE, DK, FR, GB, GR, IT, LI, LU, NL, SE**

1. Wasserdispergierbare mikrobizide Zusammensetzung umfassend 2-Thiocyanomethylthio-benzothiazol, mindestens einen verzweigtkettigen oder geradkettigen Alkylester-Alkohol und mindestens ein Dispergiermittel.

2. Zusammensetzung nach Anspruch 1, worin das Dispergiermittel ein Polyoxyethylenalkylarylether, Polyoxyethylenalkylether, Polyoxyethylenglycerid, Alkylarylsulfonat, Polyalkylenglycolether oder Propylenoxid/Ethylenoxid-Blockpolymer ist.

3. Zusammensetzung nach Anspruch 1 oder Anspruch 2, worin der Alkylester-Alkohol ein verzweigtkettiger Alkylester-Alkohol mit einem Molekulargewicht von ungefähr 130 bis 300 ist.

4. Zusammensetzung nach Anspruch 3, worin der Alkylester-Alkohol ein Gemisch aus 2,2,4-Trimethylpentan-1,3-diol-1-isobutyrat und 2,2,4-Trimethylpentan-1,3-diol-3-isobutyrat ist.

5. Zusammensetzung nach Anspruch 4, worin die 1-Isobutyratverbindung mindestens 95 Gew.-% des Gemisches ausmacht.

6. Zusammensetzung nach einem der vorhergehenden Ansprüche, worin die Menge des 2-Thiocyanomethylthio-benzothiazols 10 bis 50%, die Menge des verzweigtkettigen oder geradkettigen Alkylester-Alkohols 20 bis 80% und die Menge des Dispergiermittels 5 bis 30%, jeweils in Gew.-%, beträgt.

7. Zusammensetzung nach einem der vorhergehenden Ansprüche, worin die Menge des 2-Thiocyanomethylthio-benzothiazols 20 bis 50%, die Menge des verzweigtkettigen oder geradkettigen Alkylester-Alkohols 20 bis 70% und die Menge des Dispergiermittels 5 bis 25%, jeweils in Gew.-%, beträgt.

8. Zusammensetzung nach einem der vorhergehenden Ansprüche, ferner umfassend ein Alkyl-N,N-dialkylamid der Formel

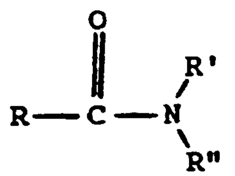

worin R ein gesättigter oder ungesättigter Alkylrest ist, der Hydroxy-substituiert sein kann und 1 bis 22 Kohlenstoffatome enthält, und R' und R" gesättigte oder ungesättigte Alkylreste sind, die 1 bis 4 Kohlenstoffatome enthalten.

9. Zusammensetzung nach Anspruch 8, worin die Menge des 2-Thiocyanomethylthio-benzothiazols 20 bis 50%, die Menge des verzweigtkettigen oder geradkettigen Alkylester-Alkohols 10 bis 50%, die Menge des Alkyl-N,N-Dialkylamids 10 bis 35% und die Menge des Dispergiermittels 5 bis 25%, jeweils in Gew.-%, beträgt.

10. Zusammensetzung nach Anspruch 8 oder Anspruch 9, worin das Alkyl-N,N-dialkylamid das N,N-Dimethylamid von Tallölfettsäuren oder Sojabohnenölfettsäuren ist.

11. Verfahren zum Hemmen des Wachstums eines Mikroorganismus auf einem Substrat, das für ein solches Wachstum anfällig ist, welches die Schritte umfaßt:
Zugeben einer Zusammensetzung, wie sie in einem der vorhergehenden Ansprüche definiert ist, zu Wasser; und
Auftragen der daraus hervorgehenden wäßrigen Zusammensetzung auf das Substrat.

12. Verfahren zum Hemmen des Wachstums eines Mikroorganismus in einer wäßrigen Flüssigkeit in Kontakt mit einer Substanz, die für mikrobielle Beeinträchtigung anfällig ist, welches den Schritt umfaßt:
Zugeben einer Zusammensetzung, wie sie in einem der Ansprüche 1 bis 10 definiert ist, zu der wäßrigen Flüssigkeit.

**Patentansprüche für folgenden Vertragsstaat : ES**

1. Verfahren zum Herstellen einer wasserdispergierbaren mikrobiziden Zusammensetzung, umfassend das Vermischen von 2-Thiocyanomethylthio-benzothiazol, mindestens eines verzweigtkettigen oder geradkettigen Alkylester-Alkohols und mindestens eines Dispergiermittels.

2. Verfahren nach Anspruch 1, worin das Dispergiermittel ein Polyoxyethylenalkylarylether, Polyoxyethylenalkylether, Polyoxyethylenglycerid, Alkylarylsulfonat, Polyalkylenglycolether oder Propylenoxid/Ethylenoxid-Blockpolymer ist.

3. Verfahren nach Anspruch 1 oder Anspruch 2, worin der Alkylester-Alkohol ein verzweigtkettiger Alkylester-Alkohol mit einem Molekulargewicht von ungefähr 130 bis 300 ist.

4. Verfahren nach Anspruch 3, worin der Alkylester-Alkohol ein Gemisch aus 2,2,4-Trimethylpentan-1,3-diol-1-isobutyrat und 2,2,4-Trimethylpentan-l,3-diol-3-isobutyrat ist.

5. Verfahren nach Anspruch 4, worin die 1-Isobutyratverbindung mindestens 95 Gew.-% des Gemisches ausmacht.

6. Verfahren nach einem der vorhergehenden Ansprüche, worin die Menge des 2-Thiocyanomethylthio-benzothiazols 10 bis 50%, die Menge des verzweigtkettigen oder geradkettigen Alkylester-Alkohols 20 bis 80% und die Menge des Dispergiermittels 5 bis 30%, jeweils in Gew.-%, beträgt.

7. Verfahren nach einem der vorhergehenden Ansprüche, worin die Menge des 2-Thiocyanomethylthio-benzothiazols 20 bis 50%, die Menge des verzweigtkettigen oder geradkettigen Alkylester-Alkohols 20 bis 70% und die Menge des Dispergiermittels 5 bis 25%, jeweils in Gew.-%, beträgt.

8. Verfahren nach einem der vorhergehenden Ansprüche, ferner umfassend das Zumischen eines Alkyl-N,N-dialkylamids der Formel

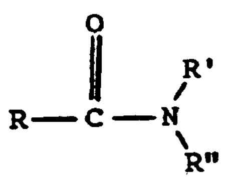

worin R ein gesättigter oder ungesättigter Alkylrest ist, der Hydroxy-substituiert sein kann und 1 bis 22 Kohlenstoffatome enthält, und R' und R" gesättigte oder ungesättigte Alkylreste sind, die 1 bis 4 Kohlenstoffatome enthalten.

9. Verfahren nach Anspruch 8, worin die Menge des 2-Thiocyanomethylthio-benzothiazols 20 bis 50%, die Menge des verzweigtkettigen oder geradkettigen Alkylester-Alkohols 10 bis 50%, die Menge des Alkyl-N,N-Dialkylamids 10 bis 35% und die Menge des Dispergiermittels 5 bis 25%, jeweils in Gew.-%, beträgt.

10. Verfahren nach Anspruch 8 oder Anspruch 9, worin das Alkyl-N,N-dialkylamid das N,N-Dimethylamid von Tallölfettsäuren oder Sojabohnenölfettsäuren ist.

11. Verfahren zum Hemmen des Wachstums eines Mikroorganismus auf einem Substrat, das für ein solches Wachstum anfällig ist, welches die Schritte umfaßt:
Zugeben einer Zusammensetzung, wie sie in einem der vorhergehenden Ansprüche definiert ist, zu Wasser; und
Auftragen der daraus hervorgehenden wäßrigen Zusammensetzung auf das Substrat.

12. Verfahren zum Hemmen des Wachstums eines Mikroorganismus in einer wäßrigen Flüssigkeit in Kontakt mit einer Substanz, die für mikrobielle Beeinträchtigung anfällig ist, welches den Schritt umfaßt:
Zugeben einer Zusammensetzung, wie sie in einem der Ansprüche 1 bis 10 definiert ist, zu der wäßrigen Flüssigkeit.

## Revendications

### Revendications pour les Etats contractants suivants : AT, BE, CH, DE, DK, FR, GB, GR, IT, LI, LU, NL, SE

1. Composition microbicide que l'on peut disperser dans l'eau, qui comprend du 2-thiocyanométhylthiobenzothiazole, au moins un alcool-ester alkylique à chaîne ramifiée ou linéaire et au moins un dispersif.

2. Composition suivant la revendication 1, caractérisée en ce que le dispersif est un éther polyoxyéthylènealkylarylique, un éther polyoxyéthylènealkylique, un polyoxyéthylèneglycéride, un alkylarylsulfonate, un éther de polyalkylèneglycol, ou un polymère séquencé d'oxyde de propylène/oxyde d'éthylène.

3. Composition suivant la revendication 1 ou la revendication 2, caractérisée en ce que l'alcool-ester alkylique précité est un alcool-ester alkylique à chaîne ramifiée, qui possède un poids moléculaire d'environ 130 à 300.

4. Composition suivant la revendication 3, caractérisée en ce que l'alcool-ester alkylique est un mélange de 2,2,4-triméthylpentane-1,3-diol-1-isobutyrate et de 2,2,4-triméthylpentane-1,3-diol-3-isobutyrate.

5. Composition suivant la revendication 4, caractérisée en ce que le composé du type 1-isobutyrate constitue au moins 95% en poids du mélange précité.

6. Composition suivant l'une quelconque des revendications précédentes, caractérisée en ce que la quantité de 2-thiocyanométhylthiobenzothiazole varie de 10 à 50%, la quantité de l'alcool-ester alkylique à chaîne ramifiée ou à chaîne linéaire varie de 20 à 80% et la quantité du dispersif fluctue de 5 à 30%, tous ces pourcentages devant s'entendre en poids.

7. Composition suivant l'une quelconque des revendications précédentes, caractérisée en ce que la quantité de 2-thiocyanométhylthiobenzothiazole varie de 20 à 50%, la quantité d'alcool-ester alkylique à chaîne ramifiée ou à chaîne linéaire varie de 20 à 70% et la quantité du dispersif fluctue de 5 à 25%, tous ces pourcentages devant s'entendre en poids.

8. Composition suivant l'une quelconque des revendications précédentes, caractérisée en ce qu'elle contient également un alkyl-N,N-dialkylamide de la formule

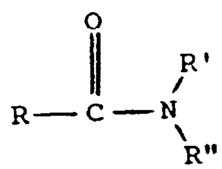

dans laquelle R représente un radical alkyle saturé ou insaturé, qui peut être hydroxysubstitué et qui contient de 1 à 22 atomes de carbone et R′ et R″ sont des radicaux alkyle saturés ou insaturés qui contiennent de 1 à 4 atomes de carbone.

9. Composition suivant la revendication 8, caractérisée en ce que la quantité de 2-thiocyanométhylthiobenzothiazole varie de 20 à 50%, la quantité d'alcool-ester alkylique à chaîne ramifiée ou à chaîne linéaire varie de 10 à 50%, la quantité d'alkyl-N,N-dialkylamide varie de 10 à 35% et la quantité du dispersif fluctue de 5 à 25%, tous ces pourcentages devant s'entendre en poids.

10. Composition suivant la revendication 8 ou la revendication 9, caractérisée en ce que l'alkyl-N,N-dialkylamide est le N,N-diméthylamide d'acides gras de tallöl ou d'acides gras d'huile de soya.

11. Procédé pour inhiber la croissance d'un micro-organisme sur un substrat pouvant subir une telle croissance, caractérisé en ce qu'il comprend les étapes consistant à :
    ajouter une composition telle que définie dans l'une quelconque des revendications précédentes à de l'eau et
    appliquer la composition aqueuse ainsi obtenue au substrat précité.

12. Procédé pour inhiber la croissance d'un micro-organisme dans un liquide aqueux en contact avec une substance pouvant subir une altération microbiologique, caractérisé en ce qu'il comprend l'étape consistant à :
ajouter une composition telle que définie dans l'une quelconque des revendications 1 à 10 au liquide aqueux précité.

**Revendications pour l'Etat contractant suivant : ES**

1. Procédé pour préparer une composition microbicide pouvant être dispersée dans l'eau, caractérisée en ce que l'on mélange du 2-thiocyanométhylthiobenzothiazole, au moins un alcool-ester alkylique à chaîne ramifiée ou linéaire et au moins un dispersif.

2. Procédé suivant la revendication 1, caractérisé en ce que le dispersif est un éther polyoxyéthylènealkylarylique, un éther polyoxyéthylènealkylique, un polyoxyéthylèneglycéride, un alkylarylsulfonate, un éther de polyalkylèneglycol, ou un polymère séquencé d'oxyde de propylène/oxyde d'éthylène.

3. Procédé suivant la revendication 1 ou la revendication 2, caractérisé en ce que l'alcool-ester alkylique précité est un alcool-ester alkylique à chaîne ramifiée, qui possède un poids moléculaire d'environ 130 à 300.

4. Procédé suivant la revendication 3, caractérisé en ce que l'alcool-ester alkylique est un mélange de 2,2,4-triméthylpentane-1,3-diol-1-isobutyrate et de 2,2,4-triméthylpentane-1,3-diol-3-isobutyrate.

5. Procédé suivant la revendication 4, caractérisé en ce que le composé du type 1-isobutyrate constitue au moins 95% en poids du mélange précité.

6. Procédé suivant l'une quelconque des revendications précédentes, caractérisé en ce que la quantité de 2-thiocyanométhylthiobenzothiazole varie de 10 à 50%, la quantité de l'alcool-ester alkylique à chaîne ramifiée ou à chaîne linéaire varie de 20 à 80% et la quantité du dispersif fluctue de 5 à 30%, tous ces pourcentages devant s'entendre en poids.

7. Procédé suivant l'une quelconque des revendications précédentes, caractérisé en ce que la quantité de 2-thiocyanométhylthiobenzothiazole varie de 20 à 50%, la quantité d'alcool-ester alkylique à chaîne ramifiée ou à chaîne linéaire varie de 20 à 70% et la quantité du dispersif fluctue de 5 à 25%, tous ces pourcentages devant s'entendre en poids.

8. Procédé suivant l'une quelconque des revendications précédentes, caractérisé en ce qu'il consiste en outre à mélanger un alkyl-N,N-dialkylamide de la formule

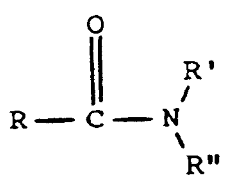

dans laquelle R représente un radical alkyle saturé ou insaturé, qui peut être hydroxysubstitué et qui contient de 1 à 22 atomes de carbone et R' et R'' sont des radicaux alkyle saturés ou insaturés qui contiennent de 1 à 4 atomes de carbone.

9. Procédé suivant la revendication 8, caractérisé en ce que la quantité de 2-thiocyanométhylthiobenzothiazole varie de 20 à 50%, la quantité d'alcool-ester alkylique à chaîne ramifiée ou à chaîne linéaire varie de 10 à 50%, la quantité d'alkyl-N,N-dialkylamide varie de 10 à 35% et la quantité du dispersif fluctue de 5 à 25%, tous ces pourcentages devant s'entendre en poids.

10. Procédé suivant la revendication 8 ou la revendication 9, caractérisé en ce que l'alkyl-N,N-dialkylamide est le N,N-diméthylamide d'acides gras de tallöl ou d'acides gras d'huile de soya.

11. Méthode pour inhiber la croissance d'un micro-organisme sur un substrat pouvant subir une telle croissance, caractérisée en ce qu'elle comprend les étapes consistant à :

ajouter une composition telle que définie dans l'une quelconque des revendications précédentes à de l'eau et

appliquer la composition aqueuse ainsi obtenue au substrat précité.

**12.** Méthode pour inhiber la croissance d'un micro-organisme dans un liquide aqueux en contact avec une substance pouvant subir une altération microbiologique, caractérisée en ce qu'elle comprend l'étape consistant à :

ajouter une composition telle que définie dans l'une quelconque des revendications 1 à 10 au liquide aqueux précité.